# EUROPÄISCHE PATENTANMELDUNG

(11) **EP 0 882 573 A2**
(43) Veröffentlichungstag der Anmeldung: **09.12.1998**
(21) Anmeldenummer: 98108899.0
(22) Anmeldetag: 15.05.1998
(51) Int. Cl.: B32B 17/10, B60J 1/00, C03C 27/12

(54) **Verbundglasscheibe mit Funktionsfolie**

(30) Priorität: 06.06.1997 DE 19723701
(71) Anmelder: FLACHGLAS Automotive GmbH, 58455 Witten (DE)
(72) Erfinder: Paulus, Peter, Dr., 48167 Münster (DE); Jung, Gerwin, 58455 Witten (DE); Baranski, Detlef, 45663 Recklinghausen (DE)
(74) Vertreter: Tönhardt, Marion, Dr.

(57) **Zusammenfassung**

Eine Verbundglasscheibe mit einer zwischen Verbundschichten eingebetteten transparenten Funktionsfolie, die mindestens eine Aussparung aufweist, wobei im Bereich der Aussparung eine transparente Hilfsfolie angeordnet ist, deren Dicke im wesentlichen der Funktionsfolie entspricht ist dadurch gekennzeichnet, daß die Hilfsfolie den Rand der Aussparung zumindest bereichsweise geringfügig überlappt.

## Beschreibung

Die Erfindung bezieht sich auf eine Verbundglasscheibe mit einer zwischen Verbundschichten eingebetteten transparenten Funktionsfolie, die eine Aussparung aufweist, wobei im Bereich der Aussparung der Funktionsfolie eine transparente Hilfsfolie angeordnet ist, deren Dicke im wesentlichen der Dicke der Funktionsfolie entspricht. Die Erfindung betrifft insbesondere Verbundsicherheitsglasscheiben des vorgenannten Aufbaus.

Aussparung in der Funktionsfolie meint im Rahmen der Erfindung sowohl eine vollständig von der Funktionsfolie umgrenzte Ausnehmung innerhalb der Fläche der Funktionsfolie als auch zum Rand hin offene Ausschnitte im Randbereich der Funktionsfolie. Die Erfindung umfaßt insbesondere solche Verbundglasscheiben, bei denen der Rand der Funktionsfolie gegenüber dem Rand der Verbundglasscheibe zumindest bereichsweise zurückversetzt ist, wobei der so gebildete folienfreie Randbereich die genannte Aussparung bildet.

Verbundglasscheiben bestehen aus mindestens einer biegesteifen Scheibe aus anorganischem oder organischem Glas, die im Falle von Verbundsicherheitsglasscheiben mit Sicherheitseigenschaften vermittelnden Kunststofflagen sowie im Regelfall mit mindestens einer weiteren Glasscheibe verbunden ist. Zwischen den verschiedenen Lagen der Verbundglasscheiben sind Verbundschichten angeordnet, deren Aufgabe es ist, die Lagen adhäsiv miteinander zu verbinden. Die Verbundschichten vermitteln entweder durch geeignete Materialauswahl und Dicke selbst dem Laminat die geforderten Sicherheitseigenschaften oder stellen die Verbindung zu die Sicherheitseigenschaften vermittelnden gesonderten Lagen des Laminats her. In der Praxis kommen für die Verbundschichten vor allem Folien aus Polyvinylbutyral oder Ethylenvinylacetat-Copolymeren zur Anwendung, deren Dicke typischerweise bei 0,38 mm oder einem Mehrfachen davon liegt.

Verbundglasscheiben des vorgenannten Aufbaus werden, insbesondere fuhr Fahrzeuganwendungen, zunehmend mit zusätzlichen, zwischen Verbundschichten eingebetteten Funktionsfolien versehen, mit deren Hilfe die Verbundglasscheiben zusätzliche Funktionen, wie z.B. Sonnenschutzeigenschaften oder Beheizbarkeit, übernehmen sollen. Bekannte Funktionsfolien bestehen aus thermoplastischen Trägerfolien, z.B. aus biaxial gerecktem Polyethylenterephthalat (PET) oder ähnlichen Materialien, in einer Dicke von etwa 10 - 100 µm, die mit einem Dünnschichtsystem beschichtet sind (US-PS 47 99 745).

Im Normalfall weisen die Funktionsfolien die gleichen äußeren Abmessungen auf wie die anderen Lagen der Verbundglasscheibe und enden somit an deren Rand. Es ist jedoch bereits bekannt, für verschiedene Anwendungen Funktionsfolien mit einer Aussparung im Randbereich zu verwenden.

Verwendet man Funktionsfolien mit einer Aussparung als Zwischenlage in Verbundglasscheiben, so führt dies dazu, daß im Übergangsbereich von der Aussparung zur Funktionsfolie - im folgenden als Rand der Aussparung bezeichnet - eine Dickenstufung entsteht, die je nach Dicke der Funktionsfolie mehr oder weniger störende optische Verzerrungen (Linseneffekt) vetursacht.

US-PS 52 08 080 offenbart eine Verbundglasscheibe des gattungsgemäßen Aufbaus, bei der die Funktionsfolie geringere Abmessungen als die einzelnen Glasscheiben aufweist, also im Randbereich mit einer umlaufenden Aussparung versehen ist. Im Bereich der umlaufenden Aussparung werden an den Rand der Aussparung angrenzende Hilfsstreifen aus thermoplastischem Material, vorzugsweise aus dem Material der Verbundschichten, auf Stoß mit der Funktionsfolie angeordnet. Auf diese Weise soll die Funktionsfolie gänzlich in Verbundschichten eingebettet werden. Es hat sich herausgestellt, daß auf diese Weise der Einschluß von Luftblasen zwischen dem Rand der Aussparung und den Hilfsstreifen nicht sicher vermieden werden kann. Außerdem können im Bereich des Randes der Aussparung störende optische Verzerrungen auftreten.

Der Erfindung liegt das technische Problem zugrunde, gattungsgemäße Verbundglasscheiben so zu verbessern, daß optische Verzerrungen wie z.B. Linseneffekte im Bereich des Randes der Aussparung weitgehend vermieden werden.

Die erfindungsgemäße Lösung ist Gegenstand von Anspruch 1. Bevorzugte Weiterbildungen finden sich in den Unteransprüchen.

Überraschenderweise können durch das Einlegen einer Hilfsfolie mit annähernd gleicher Dicke wie derjenigen der Funktionsfolie im Bereich der Aussparung optische Störungen dadurch wirksam reduziert oder ganz vermieden werden, daß die Hilfsfolie zumindest bereichsweise den Rand der Aussparung geringfügig überlappt.

Ein geringfügiger Überlapp im Sinne der Erfindung liegt insbesondere dann vor, wenn die Hilfsfolie bei Betrachtung in vertikaler Projektion höchstens etwa 10 mm, vorzugsweise maximal 5 mm hinter dem Rand der Aussparung endet.

Es versteht sich, daß ein solcher Überlapp der Hilfsfolie nur dort erforderlich ist, wo der Rand der Aussparung der Funktionsfolie im Einbauzustand der Verbundglasscheibe sichtbar ist. Besonders gute optische Eigenschaften werden erzielt, wenn die Funktionsfolie und die Hilfsfolie in der gleichen Ebene angeordnet werden und somit unmittelbar überlappen. Es ist jedoch auch möglich, so vorzugehen, daß die Hilfsfolie in einer durch eine Verbundschicht von der Ebene der Funktionsfolie getrennten Ebene angeordnet ist. In diesem Falle kann erreicht werden, daß die Funktionsfolie und die Hilfsfolie jeweils beidseitig vollflächig an Verbundschichten angrenzen, so daß über die gesamte Scheibenfläche optimale Hafteigenschaften vorliegen.

Für den Fall, daß die Funktionsfolie von einer mit einem Dünnschichtsystem versehenen Trägerfolie gebildet wird, weist die Hilfsfolie bevorzugt keine oder gegebenenfalls eine von dem Dünnschichtsystem der Trägerfolie abweichende Beschichtung auf. Diese Lösung ist beispielsweise dann von besonderem Vorteil, wenn das Dünnschichtsystem elektrisch leitfähig ist und die Aussparung in der Funktionsfolie dazu dient, den ausgesparten Bereich von leitfähiger Beschichtung freizuhalten. Wenn die Trägerfolie und die Hilfsfolie aus dem gleichen Material bestehen, wird auf einfache Weise eine gute Verträglichkeit der beiden Folien erreicht. Auch wird die Herstellung einer Verbundglasscheibe bei der Verwendung gleicher oder gleichartiger Materialien für die Trägerfolie und die Hilfsfolie vereinfacht.

Es liegt im Rahmen der Erfindung, den Bereich der Aussparung und damit auch den Bereich des Randes der Aussparung zusätzlich zur erfindungsgemäßen Anordnung der Hilfsfolie dadurch optisch zu maskieren, daß in der Verbundglasscheibe ein die Aussparung zumindest teilweise überdeckender Bereich mit reduzierter Lichtdurchlässigkeit vorgesehen wird. Das kann z.B. dadurch geschehen, daß für eine der Verbundschichten eine Farbkeilfolie verwendet wird, wobei der Farbkeil so angeordnet wird, daß er die Aussparung überdeckt und jenseits des Randes der Aussparung über oder unter der Funktionsfolie ausläuft. Eine andere Möglichkeit besteht in der geeigneten Anordnung von auf eine der Glasscheiben gedruckten oder auf andere Weise aufgebrachten Maskierungsschichten, wie z.B. Punktrastern oder dergleichen.

Es versteht sich, daß die erfindungsgemäße Verbundglasscheibe mehr als eine Funktionsfolie aufweisen kann. Ebenso können in jeder der verwendeten Funktionsfolien mehrere Aussparungen vorgesehen sein.

Die Erfindung wird im folgenden anhand von Ausführungsbeispielen und Figuren erläutert.

Es zeigen - jeweils in einer Schnittdarstellung -
- Figur 1: ein erstes Ausführungsbeispiel der Erfindung mit in verschiedenen Ebenen angeordneter Funktionsfolie und Hilfsfolie,
- Figur 2: ein zweites Ausführungsbeispiel der Erfindung mit in gleicher Ebene befindlicher Funktionsfolie und Hilfsfolie.

Die in den Figuren schematisch und nicht maßstabsgerecht im Schnitt senkrecht zur Scheibenebene dargestellte Verbundglasscheibe, die z.B. für den Einsatz in Kraftfahrzeugen als Verbundsicherheitsglasscheibe ausgelegt sein mag, weist zwei äußere Glasscheiben 1, 2 auf. Die Glasscheiben 1, 2 können in bekannter Weise aus anorganischem oder organischem Glas oder glasartigem Material bestehen, in der Masse gefärbt oder ganz oder teilweise mit transparenten oder opaken Materialien beschichtet sein. Die Glasscheiben 1, 2 können chemisch oder thermisch (teil-) vorgespannt sein.

Zwischen den Glasscheiben 1, 2 befindet sich, eingebettet in Verbundschichten 5, 6, 7, eine mit einem Dünnschichtsystem 8 versehene Funktionsfolie 3. Die Funktionsfolie 3 besteht im dargestellten Beispiel aus einer 50 µm dicken PET-Trägerfolie. Als Dünnschichtsystem 8 ist ein Sonnenschutz- oder Low-E-Schichtsystem auf Basis von Silberschichten und dielektrischen Entspiegelungsschichten vorgesehen. Die Verbundschichten 5, 6, 7 bestehen jeweils aus 0,38 mm dicken PVB-Folien.

Es versteht sich, daß die Dicke der Funktionsfolie 3 und die Anzahl und Dicke der Verbundschichten 5, 6, 7 je nach Anforderung im Rahmen der Erfindung in weitem Rahmen variabel sind. Bei den angegebenen Zahlenwerten handelt es sich in soweit nur um typische Beispielwerte. Es empfiehlt sich allerdings zur weitestgehenden Reduzierung störender optischer Verzerrungen mit Verbundschichten 5, 6, 7 zu arbeiten, deren Gesamtdicke deutlich größer ist (mindestens um einen Faktor 5, bevorzugt mehr als zehnfach) als die Dicke der Funktionsfolie 3.

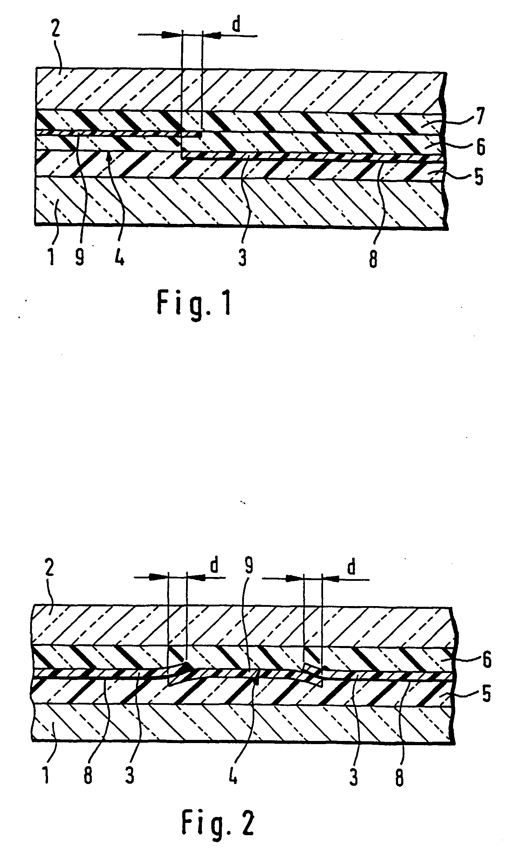

Nach einem ersten Ausführungsbeispiel, das in Figur 1 dargestellt ist, weist die Funktionsfolie 3 im Randbereich der Verbundglasscheibe eine Aussparung 4 auf, das heißt ihr Rand ist vom Rand der Verbundglasscheibe beabstandet. Der Grund hierfür mag darin bestehen, daß das Dünnschichtsystem 8 korrosionsempfindlich ist und durch die Beabstandung vom Scheibenrand vor dem Kontakt mit eindiffundierender Feuchtigkeit geschützt werden soll. Eine andere Anwendung kann darin bestehen, daß der Bereich der Aussparung 4 im Einbauzustand der Verbundglasscheibe im Fensterausschnitt einer Fahrzeugkarosserie als Schlitzantenne geschaltet wird, wobei bedarfsweise im Bereich der Aussparung 4 zusätzliche, nicht dargestellte Antennenleiter vorgesehen sein mögen (EP 07 60 537 A2). Andere Anwendungen sind denkbar.

Erfindungsgemäß ist zwischen die Verbundschichten 6 und 7 der Figur 1 und damit in einer anderen Ebene als die Funktionsfolie 3 eine transparente Hilfsfolie 9 aus unbeschichtetem, ebenfalls 50 µm dickem PET eingelegt. Die Abmessungen der Hilfsfolie 9 sind dabei so gewählt, daß sie vom Scheibenrand bis geringfügig über den Rand der Aussparung 4 reicht und so mit der Funktionsfolie 3 in der Projektion senkrecht zur Scheibenebene geringfügig überlappt. Der Überlappbereich ist in den Figuren jeweils mit 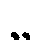 d" gekennzeichnet. Durch die überlappende Anordnung von Funktionsfolie 3 und Hilfsfolie 9 wird überraschenderweise erreicht, daß insbesondere in Transmission betrachtet im Bereich des Randes der Aussparung 4 nur sehr geringe und kaum wahrnehmbare optische Störungen - auch als Linseneffekt bezeichnet - auftreten. Solche Störungen sind dann zu beobachten, wenn auf die Verwendung einer Hilfsfolie 3 im Bereich der Aussparung 4 gänzlich verzichtet wird oder diese in der Ebene der Funktionsfolie 3 und auf Stoß mit dieser angeordnet wird. Aus produktionstechnischen Gründen wird man die Breite d des Überlappbereiches auf mindestens etwa 0,5 bis 1 mm auslegen, während höhere Überlappbreiten als etwa 10 mm optisch nachteilig sind.

Das Material und die Dicke der Hilfsfolie 9 wird man bevorzugt so auswählen, daß die Hilfsfolie 9 mit den üblichen Prozessen zur Herstellung von Verbundglasscheiben kompatibel ist. Die Dicke der Hilfsfolie 9 muß im wesentlichen der Dicke der Funktionsfolie 3 entsprechen, um optisch wirksame Dickenunterschiede der Verbundglasscheibe im Bereich der Funktionsfolie 3 und der Hilfsfolie 9 zu vermeiden. Die Hilfsfolie 9 ist vorzugsweise unbeschichtet. Dies gilt vor allem dann, wenn das Dünnschichtsystem 8 farbneutral in der Durchsicht und der Reflexion ist, wie dies bei üblichen Low-E- und Sonnenschutz-Schichtsystemen häufig der Fall ist. Sie kann aber auch mit einer Beschichtung versehen sein, die dem Bereich der Aussparung 4 (und dem Überlappbereich) eine besondere optische oder andere Funktion verleiht. So ist es beispielsweise denkbar, im Falle eines elektrisch leitfähigen Dünnschichtsystems 8 der Funktionsfolie 3 die Hilfsfolie 9 mit einer nicht-leitfähigen Beschichtung zu versehen, die eine optische Anpassung an die Funktionsfolie bewirkt. Eine derartige Annäherung der optischen Eigenschaften kann aber auch dadurch erfolgen, daß für die Hilfsfolie 9 ein passend eingefärbtes Material verwendet wird.

Im zweiten Ausführungsbeispiel gemäß Figur 2 weist die Verbundglasscheibe wieder zwei Glasscheiben 1, 2 auf. Zwischen diesen ist eine in zwei 0,38 mm dicke PVB-Verbundschichten 5, 6 eingebettete Funktionsfolie 3 aus 70 µm dickem PET mit einem Dünnschichtsystem 8 angeordnet, die diesmal eine im Kernbereich der Scheibe befindliche Aussparung 4 aufweist. Die Aussparung 4 mag einen kreisförmigen, dreieckigen, rechteckigen oder sonstwie geformten Umriß aufweisen. Sie kann dazu dienen, einen Durchlaßbereich für elektromagnetische Strahlen bereitzustellen, für die das Dünnschichtsystem 8 der Funktionsfolie 3 nicht ausreichend durchlässig ist. Eine andere Anwendung kann darin bestehen, ein elektrisch leitfähiges Dünnschichtsystem 8 in zwei oder mehrere galvanisch getrennte Bereiche, z.B. mit unterschiedlichen Antennenfunktionen oder in beheizbare und in unbeheizte Bereiche, zu unterteilen. Im Bereich der Aussparung 4 ist eine 65 µm dicke unbeschichtete transparente Hilfsfolie 9 aus Polyester angeordnet, die den Rand der Funktionsfolie 3 rundum geringfügig überlappt. Die Breite des Überlappbereiches d liegt bei etwa 3 mm. Auch bei diesem Ausführungsbeispiel treten im Bereich des Randes der Aussparung 4 überraschenderweise keine nennenswerten Störungen der Transmissionsoptik auf. So ergaben Messungen an Verbundglasscheiben gemäß den beiden Ausführungsbeispielen Brechkräfte in Transmission im Bereich des Randes der Aussparung von deutlich weniger als 15 mdpt. Im Vergleich dazu zeigten Verbundglasscheiben mit Funktionsfolien, bei denen keine Hilfsfolien in der Aussparung angeordnet wurden, Linseneffekte mit Brechkräften von etwa 40 mdpt, während in einem weiteren Vergleichsbeispiel. bei dem passend zur Aussparung geschnittene Hilfsfolien ohne Überlappung mit der Funktionsfolie in die Aussparung eingelegt wurden, sogar Brechkräfte von über 60 mdpt festgestellt wurden.

Es liegt im Rahmen der Erfindung, zwischen den Glasscheiben 1, 2 der Verbundglasscheibe weitere, nicht in den Figuren dargestellte Elemente wie z.B. Heizfelder, Antennenleiter, Anschlußkabel, Bedruckungen, Dünnschichtsysteme etc. vorzusehen. Es versteht sich, daß erfindungsgemäße Verbundglasscheiben mehr als eine Aussparung 4 in der funktionsfolie 3 aufweisen können. Die Herstellung der Verbundglasscheibe kann beispielsweise mit Verfahren erfolgen, wie sie dem Fachmann aus WO 97/10 099 oder US-PS 52 08 080 bekannt sind.

Die in der vorstehenden Beschreibung, in der Zeichnung sowie in den Ansprüchen offenbarten Merkmale der Erfindung können sowohl einzeln als auch in heliebigen Kombinationen für die Verwirklichung der Erfindung in ihren verschiedenen Ausführungsformen wesentlich sein.

## Patentansprüche

1. Verbundglasscheibe mit einer zwischen Verbundschichten eingebetteten transparenten Funktionsfolie, die mindestens eine Aussparung aufweist, wobei im Bereich der Aussparung eine transparente Hilfsfolie angeordnet ist, deren Dicke im wesentlichen der Dicke der Funktionsfolie entspricht,
dadurch gekennzeichnet, daß
die Hilfsfolie den Rand der Aussparung zumindest bereichsweise geringfügig überlappt.

2. Verbundglasscheibe nach Anspruch 1, dadurch gekennzeichnet, daß die Hilfsfolie den Rand der Aussparung um maximal 10 mm, vorzugsweise maximal 5 mm, überlappt.

3. Verbundglasscheibe nach einem der vorangehenden Ansprüche, dadurch gekennzeichnet, daß die Hilfsfolie in der gleichen Ebene angeordnet ist wie die Funktionsfolie.

4. Verbundglasscheibe nach einem der Ansprüche 1 oder 2, dadurch gekennzeichnet, daß die Hilfsfolie in einer durch eine Verbundschicht von der Ebene der Funktionsfolie getrennten Ebene angeordnet ist.

5. Verbundglasscheibe nach einem der vorangehenden Ansprüche mit einer Funktionsfolie aus einer mit einem Dünnschichtsystem versehenen Trägerfolie, dadurch gekennzeichnet, daß die Hilfsfolie keine oder eine von dem Dünnschichtsystem der Trägerfolie abweichende Beschichtung aufweist.

6. Verbundglasscheibe nach einem der vorangehenden Ansprüche, dadurch gekennzeichnet, daß die Trägerfolie und die Hilfsfolie aus dem gleichen Material bestehen.

7. Verbundglasscheibe nach einem der vorangehenden Ansprüche, dadurch gekennzeichnet, daß ein die Aussparung zumindest teilweise überdeckender Bereich mit reduzierter Lichtdurchlässigkeit, z.B. ein Farbkeil einer Farbkeilfolie oder ein Rasterdruck, vorhanden ist.
